# EUROPÄISCHE PATENTANMELDUNG

(11) **EP 3 118 602 A1**
(43) Veröffentlichungstag der Anmeldung: **18.01.2017**
(21) Anmeldenummer: 16185169.6
(22) Anmeldetag: 25.09.2014
(51) Int. Cl.: G01M 3/00, G01M 3/24, F16L 55/30

(54) **VORRICHTUNG ZUM PRÜFEN VON LEITUNGEN**

(30) Priorität: 28.11.2013 AT 9112013
(62) Teilanmeldung aus: 14792369.2
(71) Anmelder: Taferner, Marko, 9061 Wölfnitz (AT)
(72) Erfinder: Taferner, Marko, 9061 Wölfnitz (AT)
(74) Vertreter: Beer & Partner Patentanwälte KG

(57) **Zusammenfassung**

Eine Vorrichtung (1) zum Erfassen von Daten und Merkmalen von Leitungen umfasst wenigstens eine Kamera (3, 5), wenigstens eine Wegmesseinrichtung und wenigstens eine Einrichtung zum Messen von Eigenschaften des in der Leitung enthaltenen Mediums. Weiters können eine Beleuchtungseinrichtung (4), ein Ortungssensor (10), der Daten betreffend die aktuelle Position der Vorrichtung (1) abgibt und ein Neigungsmesser (Inklinometer und Kreiselkompass 9) vorgesehen sein. Die Vorrichtung kann einen passiven oder aktiven Antrieb zum Bewegen der Vorrichtung (1) entlang der Leitung haben. Die Vorrichtung (1) kann mit Hilfe von Fotogeometrie oder mit Schall, Radar, Beschleunigungssensoren und/oder mechanischen Wegmessungen eine Längenaufzeichnung der Leitung erfassen. So kann nach einer erfolgten Inspektion einer Leitung jeder Punkt längenmäßig genau zugeordnet werden.

## Beschreibung

Die Erfindung betrifft eine Vorrichtung mit den Merkmalen des einleitenden Teils von Anspruch 1.

Es besteht ein Bedarf an Vorrichtungen, mit denen Daten von Leitungen und deren Merkmale (Eigenschaften) erfasst werden können.

US 2012/215348 A1 offenbart eine Vorrichtung zum Erfassen von Daten und Merkmalen von Leitungen umfassend wenigstens eine Kamera, wenigstens eine Wegmesseinrichtung und wenigstens eine Einrichtung zum Messen von Eigenschaften des in der Leitung enthaltenen Mediums. Der aus US 2012/0215346 A1 bekannten Vorrichtung ist ein Antrieb zum Bewegen der Vorrichtung entlang der Leitung zugeordnet.

Aus US 2007/0022935 A1 ist ein unbemanntes Tauchfahrzeug bekannt, das ferngesteuert werden kann. Das aus US 2007/0022935 A1 bekannte Fahrzeug wird normalerweise über ein Kabel ferngesteuert. Das Fahrzeug der US 2007/0022935 A1 soll nach einem unerwünschten Durchtrennen des Steuerkabels für eine beschränkte Zeitspanne auch ohne Steuerkabel betätigt werden können.

Das Fahrzeug der US 2007/0022935 A1 umfasst zwei Wassertanks als Auftriebskörper, wobei der Auftrieb auf negativ eingestellt wird, sodass das Fahrzeug in der Flüssigkeit in der zu überprüfenden Leitung untertaucht und auf dem unteren Bereich der Leitung aufsitzt. Für das Bewegen des Fahrzeuges der US 2007/0022935 A1 sind Raupenantriebe vorgesehen, wobei das Fahrzeug zusätzlich über Gleitstücke an der Innenwand des oberen Bereiches der zu überprüfenden Leitung geführt wird.

In dem aus US 2007/0022935 A1 bekannten Fahrzeug können Mikrokontroller und Mikroprozessoren vorgesehen sein.

In US 2007/0203623 A1 ist ein an der Oberfläche eines Gewässers schwimmendes Fahrzeug nach Art eines Schiffes beschrieben, das mit einer Steuerungsvorrichtung ausgebildet ist.

Das aus US 2007/0203623 A1 bekannte Fahrzeug (eigentlich ein Schiff) ist nicht für die Verwendung in einer Leitung oder dgl. bestimmt.

Das Fahrzeug der US 2007/0203623 A1 ist nicht dazu bestimmt unterzutauchen, sondern soll auf Wasser schwimmen. Das Fahrzeug kann ferngesteuert werden, wozu es mit Antennen ausgestattet ist. Für die Energieversorgung des Fahrzeuges der US 2007/0203623 A1 sind Batterien und für die Steuerung elektronische Bauelemente vorgesehen.

In US 2002/0033019 A1 ist ein Kraftwerk beschrieben, das eine Wasserströmung oder Wind ausnützen soll. Dazu sind bei dem System der US 2002/0033019 A1 schirmartige Bauteile vorgesehen, die durch eine Wasserströmung oder eine Luftströmung (Wind) betätigt werden, um Seile von einer Trommel abzuspulen, sodass sich diese Trommel dreht und als Antrieb verwendet werden kann.

Der Erfindung liegt die Aufgabe zugrunde, ein verbessertes gattungsgemäßes Gerät zur Verfügung zu stellen.

Gelöst wird diese Aufgabe erfindungsgemäß mit einer Vorrichtung, welche die Merkmale von Anspruch 1 aufweist.

Bevorzugte und vorteilhafte Ausgestaltungen der Erfindung sind Gegenstand der Unteransprüche.

Durch die erfindungsgemäße Vorrichtung ist es möglich, Daten von beliebigen Leitungen und mit möglichen Ausführungsformen der erfindungsgemäßen Vorrichtung auch Daten von in der Leitung enthaltenen oder durch die Leitung transportierten Medien zu erfassen und für die Auswertung weiterzuleiten.

Leitungen sind im vorliegenden Zusammenhang unter anderem Abwasserfreispiegelkanäle, Abwasser(pumpen)druckleitungen, Wasserleitungen, Druckleitungen für flüssige und gasförmige Medien, wie z.B. Trinkwasserleitungen, Ölleitungen (Pipelines), Fernwärmeleitungen, Gasleitungen, Kabelschutzrohre, Kraftwerksleitungen oder beliebige Industrierohre.

Die erfindungsgemäße Vorrichtung ist insbesondere ein universal einsetzbares, vorzugsweise frei schwimmendes, optisches Messgerät, das je nach der Art der Leitung und des in der Leitung geförderten Mediums ausgeführt werden kann.

Im Einzelnen handelt es sich bei der erfindungsgemäßen Vorrichtung um ein, vorzugsweise schwimmendes, Untersuchungsgerät für Rohrleitungen, wobei eine Kamera vorgesehen ist, die Bilder und Videos der untersuchten Leitung aufnimmt, speichert oder unmittelbar an eine Auswertung weitergibt.

Die erfindungsgemäße Vorrichtung kann auch so ausgebildet werden, dass sie mit Hilfe von Fotogeometrie oder mit Schall, Radar, Beschleunigungssensoren, mechanischer Wegmessung oder einer Kombination derselben eine Längenaufzeichnung der Leitung erstellen kann. So kann nach einer erfolgten Inspektion einer Rohrleitung jeder Punkt längenmäßig genau zugeordnet werden.

Die erfindungsgemäße Vorrichtung kann eingesetzt werden, ohne dass die Benutzung der zu prüfenden Leitung unterbrochen wird.

Bei Verwendung der erfindungsgemäßen Vorrichtung ist es nicht erforderlich, dass die Leitung gereinigt wird.

Die erfindungsgemäße Vorrichtung erlaubt eine kostengünstige Untersuchung von Leitungen, insbesondere eine Vor-Untersuchung von Kanälen, auch an schlecht zugänglichen Stellen. Die erfindungsgemäße Vorrichtung ist so ausgebildet, dass sie schwimmend arbeiten kann. Die erfindungsgemäße Vorrichtung schwimmt ohne Kabel frei im Medienstrom in der Leitung.

Mit der erfindungsgemäßen Vorrichtung ist je nach Ausführungsform möglich:
- den Zustand von Ablagerungen zu bewerten,
- eine optische Kontrolle von Verformungen der Leitung,
- Hochpunkte der Leitung zu ermitteln,
- eine optische Bewertung des Inneren der Leitung vorzunehmen,
- eine Leckortung ohne externe Impulsstörungen auszuführen,
- Leckgeräusche direkt aufzunehmen,
- eine Leckortung auch in schwer zugänglichen Rohren durchzuführen.

In Ausführungsformen kann die erfindungsgemäße Vorrichtung folgende Sensorik aufweisen:
- Drucktransmitter für die Druckaufzeichnung in einem Rohr, das in Betrieb ist, so dass hydraulische Modelle der Rohrleitung erfasst werden können,
- Geräuschpegelmessungen durch Geräuschpegelsensoren,
- Trübungssensoren,
- Leitfähigkeitssensoren,
- Inklinometer und Kreiselkompass für die Rekonstruktionen und Ortung des Leitungsverlaufes,
- Wandstärkenmessgeräte,
- Ortungsgeräte für die Vorrichtung,
- Temperatursensor.

Der erfindungsgemäßen Vorrichtung kann ein Antrieb zugeordnet sein, um die Vorrichtung in der Leitung, die zu untersuchen ist, weiterzubewegen. Die Fortbewegung kann beispielsweise in Freispiegelleitungen oder Selbstfallleitungen vor allem dadurch erfolgen, dass die erfindungsgemäße Vorrichtung mit dem in der Leitung strömenden Medium mitschwimmt.

In Druckleitungen können der Vorrichtung Einrichtungen nach Art von Schirmen (Regenschirmen) zugeordnet sein, um die Vorrichtung durch das strömende Medium weiterzubewegen.

Eine weitere Möglichkeit für das Weiterbewegen der Vorrichtung in der Leitung besteht darin, dass ein Antriebspropeller vorgesehen ist, der mit einem Elektromotor gekuppelt ist.

Wenn die erfindungsgemäße Vorrichtung in einem Abwasserfreispiegelkanal eingesetzt wird, wird sie als schwimmende Vorrichtung in einem Abwasserschacht eingebracht und schwimmt dann mit dem im Kanal enthaltenen, fäkalienhaltigen Wasser in Fließrichtung weiter. So kann je nach Fließgeschwindigkeit die Vorrichtung pro Stunde 0,01 bis über 30 km zurücklegen und wird bei dem Schacht am Ende der zu überprüfenden Strecke der Leitung wieder aus dem Kanal entnommen.

Die von der Vorrichtung erfassten Daten können nachträglich entweder über Bluetooth, Funk oder eine andere Datenübertragungsmöglichkeit ausgelesen werden oder es werden aus dem in der Vorrichtung enthaltenen Datenträger die Daten auf einen Rechner (PC) übertragen. Die weitere Auswertung kann mit einer entsprechenden Software über eine Schnittstelle für GIS (Leitungskataster) erfolgen.

Beispielsweise können in Abwasserfreispiegelkanälen folgende Daten erfasst werden:
- Temperaturmessung für die Fremdwassermessung,
- optische Inspektion,
- Längenmessung,
- Inklinometer,
- Ortungssensor: ein elektronischer Standardensor (z.B.: 32,8 kHz), welcher mit einem Leitungsortungsgerät punktgenau geortet werden kann, sodass die Lage der Vorrichtung in Echtzeit erfasst werden kann.

Bei dem Einsatz in Trinkwasser und Druckleitungen (bis 100 bar) kann die erfindungsgemäße Vorrichtung folgende Untersuchungen durchführen:
- optische Inspektion,
- Längenmessung,
- akustische Untersuchung auf eventuelle Undichtheiten (Tropfverluste, Leckagen) mit Angabe der Lage der Undichtheit, gemessen vom Ausgangspunkt oder der nächstgelegenen Armatur (Schieber, Ventil-Klappe, Anbohrschelle, Entlüftungstopf usw.),
- Leitfähigkeitssensor,
- Trübungssensor,
- Wandstärkenmessgerät,
- Inklinometermessungen und Kreiselkompass für die Rekonstruktion und Ortung des Leitungsverlaufes,
- Drucksensor,
- Temperatursensor.

Die Fortbewegung der erfindungsgemäßen Vorrichtung in einer Trinkwasserleitung oder Druckleitung bis 100 bar kann, so wie dies oben für Abwasserfreispiegelkanäle beschrieben ist, erfolgen. Dies gilt auch für das Auswerten der Daten.

Wenn eine erfindungsgemäße Vorrichtung in Industrierohren eingesetzt wird (bis 100 bar Druck), kann die erfindungsgemäße Vorrichtung in die Druckleitung während des Betriebes derselben eingebracht werden und unter Betriebsdruck folgende Untersuchungen ausführen:
- optische Inspektion,
- Längenmessung,
- akustische Untersuchung auf eventuelle Undichtheiten und Tropfverluste bis zur Leckage mit Angabe der Stelle der Undichtheit oder Leckage,
- Leitfähigkeitssensor,
- Drucksensor,
- Temperatur,
- akustische Untersuchung Leckagen,
- Trübungssensor,
- Wandstärkenmessgerät,
- Inklinometermessungen und Kreiselkompass.

Je nach Fließgeschwindigkeit des Mediums in einem Industrierohr kann die erfindungsgemäße Vorrichtung je Stunde 0,01 bis 30 km zurücklegen und wird am Ende der zu überprüfenden Strecke des Industrierohres wieder entnommen. Die von der Vorrichtung erfassten Daten betreffend das Industrierohr bzw. das in diesem geförderte Medium werden entweder über Bluetooth, Funk oder andere Datenübertragungsmöglichkeiten ausgelesen oder es werden über den in der Vorrichtung befindlichen Datenträger die Daten auf einen Rechner (PC) übertragen. Die Auswertung der erfassten Daten kann durch eine Auswertesoftware mit einer Schnittstelle für GIS (Leitungskataster) erfolgen.

Wenn eine erfindungsgemäße Vorrichtung zum Erfassen von Daten und Merkmalen einer Gasrohrleitung eingesetzt wird, kann das Messgerät beispielsweise folgende Untersuchungen durchführen:
- optische Inspektion,
- Längenmessung,
- akustische Untersuchung auf eventuelle Undichtheiten und Tropfverluste bis zur Leckage mit Angabe der Stelle der Undichtheit oder Leckage,
- Leitfähigkeitssensor,
- Trübungssensor,
- Wandstärkenmessgerät,
- Inklinometermessungen und Kreiselkompass.

Je nach Fließgeschwindigkeit des Mediums in einem Gasrohr kann die erfindungsgemäße Vorrichtung je Stunde 0,01 bis 30 km zurücklegen und wird am Ende der zu überprüfenden Strecke des Gasrohres wieder entnommen. Die von der Vorrichtung erfassten Daten betreffend das Gasrohr bzw. das in diesem geförderte Medium werden entweder über Bluetooth, Funk oder andere Datenübertragungsmöglichkeiten ausgelesen oder es werden über den in der Vorrichtung befindlichen Datenträger die Daten auf einen Rechner (PC) übertragen. Die Auswertung der erfassten Daten kann durch eine Auswertesoftware mit einer Schnittstelle für GIS (Leitungskataster) erfolgen.

Wenn eine erfindungsgemäße Vorrichtung so ausgebildet ist, dass sie in Rohrleitungen für Fernwärme eingesetzt wird, besteht die Möglichkeit, die Vorrichtung während des Betriebes der Leitung einzusetzen, wobei folgende Untersuchungen durchgeführt werden können:
- optische Inspektion,
- Längenmessung,
- akustische Untersuchung auf eventuelle Undichtheiten und Tropfverluste bis zur Leckage mit Angabe der Stelle der Undichtheit oder Leckage,
- Leitfähigkeitssensor,
- Trübungssensor,
- Wandstärkenmessgerät,
- Inklinometermessungen und Kreiselkompass.

Je nach Fließgeschwindigkeit des Mediums in einer Rohrleitung für Fernwärme kann die erfindungsgemäße Vorrichtung je Stunde 0,01 bis 30 km zurücklegen und wird am Ende der zu überprüfenden Strecke der Rohrleitung für Fernwärme wieder entnommen. Die von der Vorrichtung erfassten Daten betreffend die Rohrleitung für Fernwärme bzw. das in diesem geförderte Medium werden entweder über Bluetooth, Funk oder andere Datenübertragungsmöglichkeiten ausgelesen oder es werden über den in der Vorrichtung befindlichen Datenträger die Daten auf einen Rechner (PC) übertragen. Die Auswertung der erfassten Daten kann durch eine Auswertesoftware mit einer Schnittstelle für GIS (Leitungskataster) erfolgen.

In einer weiteren Ausführungsform kann die erfindungsgemäße Vorrichtung für das Untersuchen von Ölleitungen (Pipelines) herangezogen werden, wobei auch hier die Vorrichtung während des Betriebes arbeiten kann, um beispielsweise folgende Untersuchungen durchzuführen:
- optische Inspektion,
- Längenmessung,
- akustische Untersuchung auf eventuelle Undichtheiten und Tropfverluste bis zur Leckage mit Angabe der Stelle der Undichtheit oder Leckage,
- Leitfähigkeitssensor,
- Trübungssensor,
- Wandstärkenmessgerät,
- Inklinometermessungen und Kreiselkompass,
- Drucksensor.

Je nach Fließgeschwindigkeit des Mediums in einer Ölleitung (Pipeline) kann die erfindungsgemäße Vorrichtung je Stunde 0,01 bis 30 km zurücklegen und wird am Ende der zu überprüfenden Strecke aus der Ölleitung (Pipeline) wieder entnommen. Die von der Vorrichtung erfassten Daten betreffend die Ölleitung (Pipeline) bzw. das in dieser geförderte Medium werden entweder über Bluetooth, Funk oder andere Datenübertragungsmöglichkeiten ausgelesen oder es werden über den in der Vorrichtung befindlichen Datenträger die Daten auf einen Rechner (PC) übertragen. Die Auswertung der erfassten Daten kann durch eine Auswertesoftware mit einer Schnittstelle für GIS (Leitungskataster) erfolgen.

Weitere Einzelheiten und Merkmale der Erfindung werden nachstehend anhand der in den Zeichnungen gezeigten Ausführungsbeispiele erläutert. Es zeigt:
- Fig. 1: schematisch eine erfindungsgemäße Vorrichtung,
- Fig. 2: schematisch eine abgeänderte Ausführungsform einer erfindungsgemäßen Vorrichtung und
- Fig. 3: ein Anwendungsbeispiel erfindungsgemäßer Vorrichtungen.

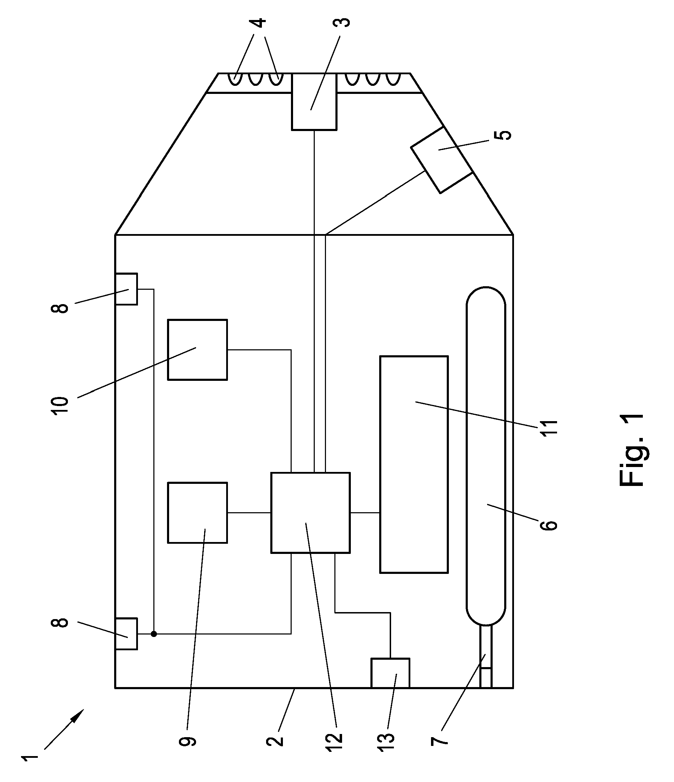

Eine erfindungsgemäße Vorrichtung 1 besitzt in der in Fig. 1 gezeigten Ausführungsform ein Gehäuse 2. An dem einen Ende, bezogen auf die Bewegungsrichtung während einer Untersuchung einer Leitung dem vorderen Ende, ist eine Kamera 3 vorgesehen. Der Kamera 3 ist beispielsweise rings um die Kamera 3 herum eine Beleuchtungseinrichtung 4 vorgesehen, die beispielsweise als LED-Beleuchtungseinheit ausgebildet ist.

Zusätzlich kann die Vorrichtung 1 eine weitere Kamera 5 aufweisen, die einen anderen Blickwinkel hat, als die am vorderen Ende angeordnete Kamera 3. Da die erfindungsgemäße Vorrichtung 1 beispielsweise in einem flüssigen Medium schwimmen soll, hat sie eine Schwimmblase 6, die über eine Leitung 7, die in der Wand des Gehäuses 2 mündet, mit dem Bereich außerhalb des Gehäuses 2, also außerhalb der Vorrichtung 1, kommuniziert.

Die in Fig. 1 gezeigte Ausführungsform der Vorrichtung 1 umfasst weiters zwei Sensoren 8 für eine Wegmesseinrichtung, die es erlauben, die von der Vorrichtung 1 zurückgelegte Strecke zu erfassen.

Im Inneren des Gehäuses sind ein Inklinometer und/oder Kreiselkompass 9 und ein Ortungssender 10 angeordnet. Die Stromversorgung der verschiedenen Bauteile der erfindungsgemäßen Vorrichtung erfolgt über einen im Gehäuse 2 vorgesehenen Stromspeicher 11, beispielsweise einen Akkumulator. Alle Einrichtungen der erfindungsgemäßen Vorrichtung, wie die Kameras 3 und 5, Sensoren 8 der Wegmesseinrichtung, Radarsensor, Geschwindigkeitssensor und Temperatursensor 13, Inklinometer und Kreiselkompass 9 und Ortungssender 10 sind wirkmäßig mit einem Datenlogger und einer Steuereinheit 12 verknüpft.

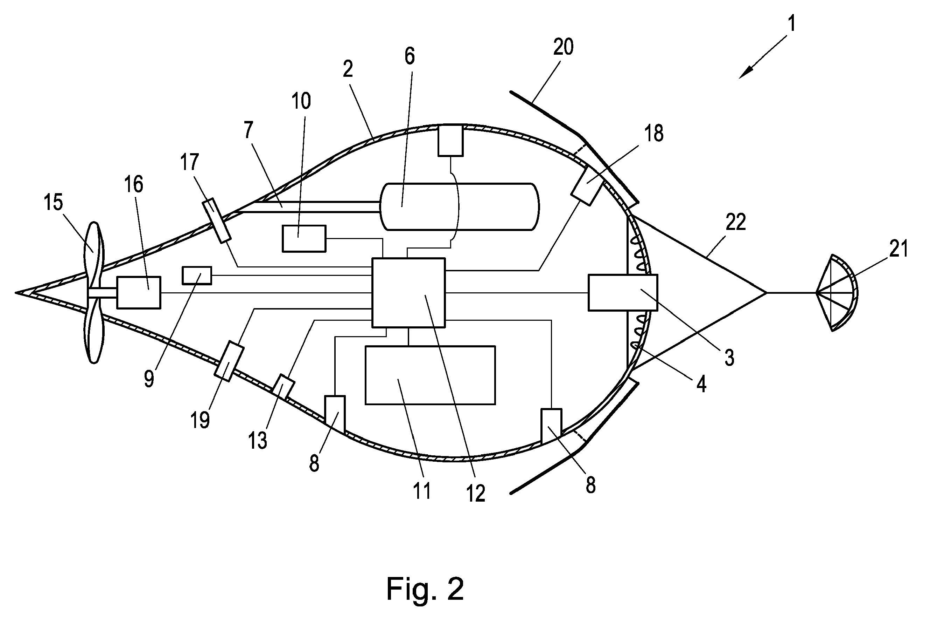

Die in Fig. 2 gezeigte Ausführungsform einer erfindungsgemäßen Vorrichtung 1 umfasst ein Gehäuse 2, das bei dieser

Ausführungsform stromlinienförmig ausgebildet ist. Die Vorrichtung 1 der Ausführungsform von Fig. 2 besitzt wieder eine Kamera 3 und eine dieser zugeordnete Beleuchtungseinheit 4, die Schwimmblase 6, die Sensoren 8 der Wegmesseinrichtung, Radarsensor, Geschwindigkeitssensor und Temperatursensor 13, das Inklinometer und Kreiselkompass 9 und den Ortungssender 10.

Die in Fig. 2 gezeigte Ausführungsform der erfindungsgemäßen Vorrichtung 1 umfasst weiters als aktiven Antrieb einen Propeller 15 mit Antriebsmotor 16, der vom Stromspeicher 11 mit Strom versorgt wird.

Anstelle oder zusätzlich zu dem aktiven Antrieb der Vorrichtung 1 in Form des Propellers 15 kann insbesondere im Bereich des vorderen Endes, wo die Kamera 3 angeordnet ist, als passiver Antrieb ein ringförmiger Schirm 20 vorgesehen sein, um die Vorrichtung 1 von durch die Leitung strömendem Medium mitzunehmen.

Der Schirm 20 kann ersetzt werden oder ergänzt werden durch ein Fallschirmsegel 21, das über Verbindungselemente 22 mit dem vorderen Ende der Vorrichtung 1 verbunden ist.

Weiters weist die in Fig. 2 gezeigte Ausführungsform einer erfindungsgemäßen Vorrichtung 1 einen Leitfähigkeitssensor 17 und einen akustischen Aufnehmer 18 auf. Schließlich ist bei der erfindungsgemäßen Vorrichtung 1 der Ausführungsform von Fig. 2 ein Trübungssensor 19 vorgesehen.

Der erfindungsgemäßen Vorrichtung kann auch eine Einrichtung zum Erfassen der Strömungsgeschwindigkeit des Mediums durch die zu überprüfende Leitung zugeordnet sein.

Die erfindungsgemäße Vorrichtung kann auch mit einem Beschleunigungssensor ausgestattet sein, so dass in Kombination mit anderen Sensoren (z.B. Radarsensor) die aktuelle Geschwindigkeit, mit der sich die Vorrichtung 1 bewegt, erfasst werden kann.

Zusätzlich kann durch Erfassen der Bildgeometrie der Rohrabschnitte (Erfassen der Länge und Zeit) auf die Geschwindigkeit der Vorrichtung 1 geschlossen werden.

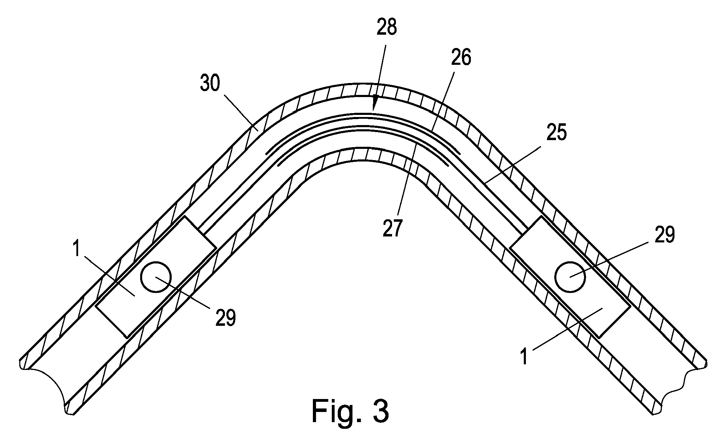

Fig. 3 zeigt ein Anwendungsbeispiel umfassend zwei erfindungsgemäße Vorrichtungen 1, die miteinander über ein flexibles (nicht längenveränderliches) Element 25 verbunden sind. Am Element 25 sind wenigstens zwei einander diametral gegenüberliegende und sich in Längsrichtung des Elementes 25 erstreckende Sensoren 26, 27, die Längenänderungen erfassen, z.B. Dehnungsmessstreifen, vorgesehen. Wenn das Element 25 gebogen wird (z.B. Biegung 28 in Fig. 3), wird der an der Außenkurve liegende Sensor 26 verlängert (gedehnt) und der an der Innenkurve liegende Sensor 27 verkürzt (gestaucht). Diese Längenänderungen der Sensoren 26, 27 werden erfasst und erlauben es in Verbindung mit Kreiselkompass-Einrichtungen 29 in den Vorrichtungen 1 den Verlauf der Leitung 30 zu erfassen.

Zusammenfassend kann ein Ausführungsbeispiel der Erfindung wie folgt beschrieben werden:
Eine Vorrichtung 1 zum Erfassen von Daten und Merkmalen von Leitungen umfasst wenigstens eine Kamera 3, 5, wenigstens eine Wegmesseinrichtung und wenigstens eine Einrichtung zum Messen von Eigenschaften des in der Leitung enthaltenen Mediums. Weiters können eine Beleuchtungseinrichtung 4, ein Ortungssensor 10, der Daten betreffend die aktuelle Position der Vorrichtung 1 abgibt und ein Neigungsmesser (Inklinometer und Kreiselkompass 9) vorgesehen sein. Die Vorrichtung kann einen passiven oder aktiven Antrieb zum Bewegen der Vorrichtung 1 entlang der Leitung haben. Die Vorrichtung 1 kann mit Hilfe von Fotogeometrie oder mit Schall, Radar, Beschleunigungssensoren und/oder mechanischen Wegmessungen eine Längenaufzeichnung der Leitung erfassen. So kann nach einer erfolgten Inspektion einer Leitung jeder Punkt längenmäßig genau zugeordnet werden.

## Patentansprüche

1. Vorrichtung (1) zum Erfassen von Daten und Merkmalen von Leitungen, mit wenigstens einer Kamera (3, 5), wenigstens einer Wegmesseinrichtung und wenigstens einer Einrichtung zum Messen von Eigenschaften des in der Leitung enthaltenen Mediums, **dadurch gekennzeichnet, dass** der wenigstens einen Kamera (3,5) eine Beleuchtungseinrichtung (4) zugeordnet ist, dass ein Ortungssender (10), der Daten betreffend die aktuelle Position der Vorrichtung (1) abgibt, vorgesehen ist, dass der Ortungssender (10) ein elektronischer Sender ist, der mit einem Leitungsortungsgerät geortet werden kann, dass ein akustischer Aufnehmer (18) vorgesehen ist, der Undichtheiten der Leitung durch Tropfverlust oder Leckagen erfasst, und dass die Vorrichtung (1) ohne Kabel frei im Medienstrom in der Leitung schwimmend ausgebildet ist.

2. Vorrichtung nach Anspruch 1, **dadurch gekennzeichnet, dass** ein Neigungsmesser, insbesondere ein Inklinometer und/oder ein Kreiselkompass (9), vorgesehen ist, um den Verlauf der Leitung zu erfassen.

3. Vorrichtung nach Anspruch 1 oder 2, **dadurch gekennzeichnet, dass** der Vorrichtung (1) ein passiver oder aktiver Antrieb zum Bewegen der Vorrichtung (1) entlang der Leitung zugeordnet ist.

4. Vorrichtung nach Anspruch 3, **dadurch gekennzeichnet, dass** der Antrieb nach Art einer Schiffsschraube (15) ausgebildet ist, der ein Antriebsmotor (16) zugeordnet ist.

5. Vorrichtung nach einem der Ansprüche 1 bis 4, **dadurch gekennzeichnet, dass** in der Vorrichtung (1) ein Stromspeicher (11) für das Versorgen der in der Vorrichtung (1) vorhandenen Bauteile mit elektrischem Strom vorgesehen ist.

6. Vorrichtung nach einem der Ansprüche 1 bis 5, **dadurch gekennzeichnet, dass** die Einrichtung zum Messen von Eigenschaften des in der Leitung enthaltenen Mediums ausgewählt ist aus der Gruppe umfassend Leitfähigkeitssensor (17) und Trübungssensor (19).

7. Vorrichtung nach einem der Ansprüche 1 bis 6, **dadurch gekennzeichnet, dass** zur Regelung des Auftriebes der Vorrichtung (1) in der Vorrichtung (1) eine Schwimmblase (6) vorgesehen ist.

8. Vorrichtung nach Anspruch 7, **dadurch gekennzeichnet, dass** die Schwimmblase (6) mit dem in der Leitung enthaltenen Medium, insbesondere der in der Leitung enthaltenen Flüssigkeit, kommuniziert.

9. Vorrichtung nach einem der Ansprüche 3 bis 8, **dadurch gekennzeichnet, dass** der Antrieb ein passiver Antrieb ist, der nach Art von Schirmen ausgebildete Flächen (20, 21) umfasst.

10. Vorrichtung nach Anspruch 9, **dadurch gekennzeichnet, dass** der passive Antrieb ein am Gerät vorgesehener, ringförmiger Schirm (20) oder ein mit der Vorrichtung verbundener, fallschirmartiger Schirm (21) ist.

11. Vorrichtung nach einem der Ansprüche 1 bis 10, **dadurch gekennzeichnet, dass** die Vorrichtung (1) ein Gehäuse (2) umfasst, in bzw. an dem die Elemente und Bauteile der Vorrichtung (1) vorgesehen sind.

12. Vorrichtung nach einem der Ansprüche 1 bis 11, **dadurch gekennzeichnet, dass** der Vorrichtung ein Speicher (12), verknüpft mit einer Steuereinheit, zugeordnet ist.

13. Vorrichtung nach Anspruch 12, **dadurch gekennzeichnet, dass** dem Speicher (12) für die von der Vorrichtung erfassten Daten ein Sender zugeordnet ist, um Daten der Leitung drahtlos an ein Auswertegerät zu übermitteln.

14. Vorrichtung nach einem der Ansprüche 1 bis 13, **dadurch gekennzeichnet, dass** der Vorrichtung (1) ein Wandstärkenmessgerät zugeordnet ist.
